# EUROPÄISCHE PATENTANMELDUNG

(11) **EP 1 473 181 A2**
(43) Veröffentlichungstag der Anmeldung: **03.11.2004**
(21) Anmeldenummer: 04009673.7
(22) Anmeldetag: 23.04.2004
(51) Int. Cl.: B60J 7/22

(54) **Windabweiserelement mit Störkörper für ein öffnunfgsfähiges Fahrzeugdach sowie Herstellungsverfahren dafür**

(30) Priorität: 30.04.2003 DE 10319506
(71) Anmelder: Webasto AG, 82131 Stockdorf (DE)
(72) Erfinder: Deppe, Michael, 81371 München (DE); Koch, Robert, 86853 Langerringen (DE); Hahn, Roland, 82110 Germering (DE); Schröder, Rudolf, 81479 München (DE)
(74) Vertreter: Bedenbecker, Markus

(57) **Zusammenfassung**

Die vorliegende Erfindung betrifft ein Fahrzeugdach mit einem mit seinem hinteren Randbereich (16) ausstellbaren Windabweiserelement (20) und einer hinter dem Windabweiserelement angeordneten Abdeckanordnung zum wahlweisen gemeinsamen Verschließen oder mindestens teilweisen Freilegen einer Dachöffnung, wobei das Windabweiserelement einen Störkörper (10) zur Vermeidung unerwünschter Luftströmungsgeräusche bei geöffneter Abdeckanordnung aufweist. Der Störkörper (10) ist an das Windabweiserelement (20) angeschäumt. Ferner betrifft die Erfindung ein entsprechendes Herstellungsverfahren.

## Beschreibung

Die vorliegende Erfindung betrifft ein Fahrzeugdach gemäß dem Oberbegriff von Anspruch 1 sowie ein entsprechendes Herstellungsverfahren.

Öffnungsfähige Fahrzeugdächer, deren Dachöffnung von einem Deckel, insbesondere einem Glasdeckel verschließbar sind, sind seit längerem bekannt.

Üblicherweise sind solche öffnungsfähigen Fahrzeugdächer mit einem Windabweiser zur Verhinderung von Windgeräuschen versehen. Ein Beispiel hierfür findet sich in der DE 1 480 470. Solche Windabweiser dienen dazu, die Fahrzeuginsassen vor der Luftströmung sowie vor störenden Windgeräuschen zu schützen. Es hat sich jedoch gezeigt, dass im Fahrbetrieb mit geöffnetem Schiebedach trotz solcher Windabweiser im Fahrzeuginnenraum störende Geräusche (oft als "Wummern" bezeichnet) und Druckunterschiede entstehen, die ihre Ursache in Resonanzeffekten und einer hieraus resultierenden Pulsierung der Luftsäule im Fahrzeuginnenraum haben. Die dadurch entstehenden Geräusche und Druckunterschiede im Fahrgastraum werden oft als erhebliche Belästigung empfunden. Zur Vermeidung von solchen Wummergeräuschen im Fahrgastraum sind verschiedene Störkörper (die auch als "Diffusor" bezeichnet werden), die im Bereich der vorderen Kante der Dachöffnung oder an den Windabweisem angebracht werden, entwickelt worden.

So zeigt z.B. die DE°38°42°676°A1 einen Störkörper auf einem Windabweiser, welcher in der ausgestellten Betriebsstellung des Windabweisers diesen nach oben hin überragt und das Auftreten von störendem Wummern verhindert. Ein ähnlicher Störkörper ist in der DE°40°33°027 gezeigt, der in diesem Fall jedoch nicht auf einem Windabweiser angebracht ist, sondern vor dem vorderen Rand der Dachöffnung angeordnet ist.

Nachteilig bei diesen bekannten Störkörpern ist, dass sie in einem zusätzlichen Arbeitsschritt an z.B. einem Windabweiserelement oder an die vordere Dachkante angebracht (z.B. angeklebt) werden müssen. Dieses Verfahren erfordert zusätzliche Prozesse, z.B. zur Reinigung und zum Kleben, und zusätzliche Materialkosten für Reiniger, Kleber und Primer. Außerdem wirkt ein solcher separater Störkörper optisch oft als Fremdkörper auf dem Windabweiserelement.

Ein weiterer Störkörper zur Vermeidung von Wummergeräuschen ist aus der ein gattungsgemäßes Fahrzeugdach beschreibenden DE°195°10°822 A1 bekannt, wobei der Störkörper dort einstückig mit einem ausstellbaren, aus Glas oder Kunststoff gefertigten, vorderen Deckel einer von mehreren hintereinander angeordneten Deckeln verschließbaren Dachöffnung ausgebildet ist oder als mit dem vorderen Deckel fest verbundenes Bauteil ausgebildet ist. Nachteilig bei dieser einstückigen Ausbildung des Störkörpers mit dem vorderen Deckel ist die dabei erforderliche relativ aufwendige Fertigung.

Es ist Aufgabe der vorliegenden Erfmdung, ein Fahrzeugdach mit einem Windabweiserelement zu schaffen, bei welchem der Störkörper auf einfache Weise ohne zusätzliche Arbeitsschritte oder signifikant erhöhte Materialkosten integriert werden kann. Ferner soll ein Herstellungsverfahren für eine solches Fahrzeugdach geschaffen werden.

Diese Aufgabe wird erfindungsgemäß gelöst durch eine Fahrzeugdach gemäß Anspruch 1 sowie einem Herstellungsverfahren gemäß Anspruch 12. Bei der erfindungsgemäßen Lösung ist vorteilhaft, dass dadurch , dass der Störkörper an das Windabweiserelement angeschäumt ist, bei Windabweiserelementen, die zu Dichtungszwecken eine Randumschäumung aufweisen, der Störkörper auf einfache Weise ohne zusätzliche Arbeitsschritte in eine solche Randumschäumung integriert werden kann. Zusätzliche Befestigungsprozesse, wie z.B. für Reinigen, Kleben usw. entfallen damit, es entsteht kein Teilemehrpreis und auch zusätzliche Montagekosten können vermieden werden. Weiterhin kann sich der Störkörper nicht mehr lösen, weil Befestigungen entfallen, und es kann ein harmonischeres Erscheinungsbild erzielt werden, da der Störkörper optisch nicht als Fremdkörper auf dem Windabweiserelement wirkt.

Bevorzugte Ausgestaltungen der Erfindung ergeben sich aus den Unteransprüchen.

Im folgenden wird die Erfindung anhand der beigefügten Figuren beispielhaft näher erläutert. Es zeigt:
- Fig. 1: eine perspektivische Ansicht von oben auf eine erfindungsgemäße Windabweiserlamelle, wobei an einer Hälfte der Windabweiserlamelle (rechts in der Figur) eine Randumschäumung mit einem integriertem Störkörper (Diffusor) gezeigt ist;
- Fig. 2: eine Schnittansicht der Windabweiserlamelle entlang der Linie II-II von Fig. 1; und

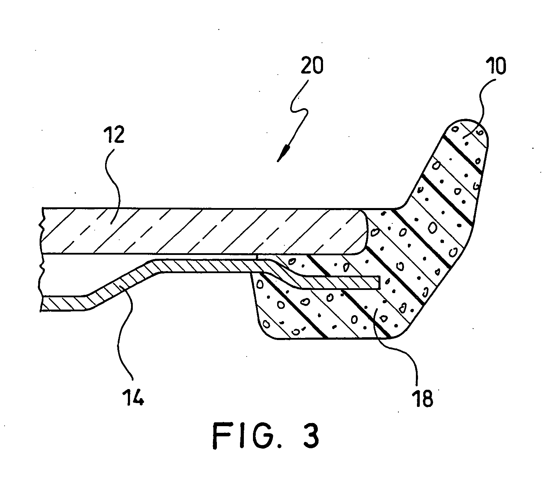

- Fig. 3: eine vergrößerte Querschnittansicht des hinteren Bereichs der Windabweiserlamelle mit dem integrierten Störkörper.

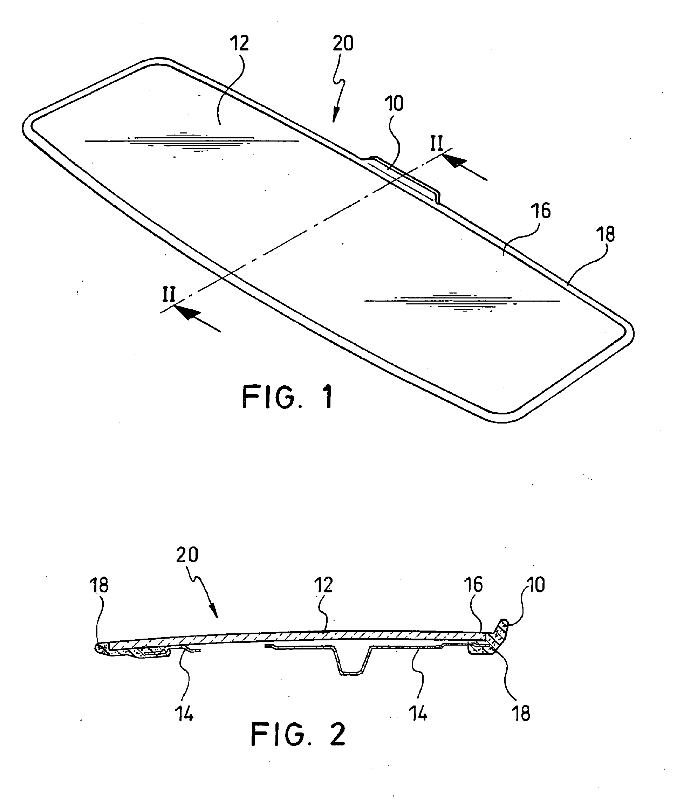

In Fig. 1 ist eine perspektivische Darstellung einer erfindungsgemäßen Windabweiserlamelle 20 gezeigt. Die Windabweiserlamelle 20 ist als Teil eines öffnungsfähigen Fahrzeugdaches, insbesondere für Pkws, ausgebildet, wobei die Windabweiserlamelle 20 an dem Vorderrand einer Dachöffnung angeordnet ist, die von der Windabweiserlamelle 20 und einer weiteren, dahinter angeordneten Abdeckanordnung, wie z.B. einem oder mehreren verstellbaren Deckeln, insbesondere Glasdeckeln, oder einem Lamellendach, gemeinsam verschlossen werden kann. In dieser Stellung liegt die Windabweiserlamelle 20 im wesentlichen horizontal. Wenn die Abdeckanordnung geöffnet wird, um den hinteren Teil der Dachöffnung freizugeben, wird die Windabweiserlamelle 20 mit ihrer Hinterkante ausgestellt, um als Windabweiser zu wirken. Es sind auch Ausführungsformen möglich, bei welchen die Windabweiserlamelle 20 bei geschlossener Abdeckanordnung ausstellbar ist.

Die Windabweiserlamelle 20 wird von einer Platte 12 gebildet, die in ihrem Randbereich 16 mit einer Randumschäumung 18 umschäumt ist. In die Randumschäumung 18 sind Verstärkungselemente 14 eingeschäumt. Die Platte 12 ist beispielsweise aus einem transparenten Material, wie z.B. Kunststoff, Einscheibensicherheitsglas (ESG) oder Mehrscheibenverbundglas, hergestellt. Die Verstärkungselemente 14 dienen dazu, die Form der Windabweiserlamelle 20 auch bei hohen Fahrgeschwindigkeiten und den damit verbundenen Kräften, die auf die Lamelle 20 wirken, beizubehalten. Solche Verstärkungselemente 14 können z.B. aus Stahlblechen hergestellt werden und dienen außerdem zur Lagerung von Stellelementen für die Verstellung der Windabweiserlamelle. Die Randumschäumung 18 kann z.B. durch eine Umschäumung mit Polyurethan (PU) hergestellt werden. Das Verstärkungselement 14 wird dabei während des Schäumprozesses in einen Hohlraum zwischen dem Schäumwerkzeug und der Platte 12 gebracht und mit eingeschäumt. Beim Umschäumungsvorgang wird dieser Hohlraum mit Schaum aufgefüllt.

Wie in Fig. 1 weiterhin gezeigt ist, ist ein Störkörper bzw. Diffusor 10 in die Randumschäumung 18 integriert, indem ein Teil der Randumschäumung 18 als Diffusor ausgebildet ist. Der Diffusor 10 dient dazu, unerwünschte Luftströmungsgeräusche bei geöffneter Abdeckanordnung zu vermeiden. Die Ausdehnung des Diffusors 10 quer zu Fahrtrichtung ist dabei vergleichsweise kurz im Vergleich zur Breite der Windabweiserlamelle bzw. der Platte 12 in dieser Richtung.

Bei der Herstellung der Windabweiserlamelle wird vorzugsweise ein Schäumwerkzeug verwendet, das so geformt ist, dass die Negativform des Diffusors 10 im Schäumwerkzeug abgebildet ist. Zusammen mit der Randumschäumung 18 wird somit der Diffusor 10 in einem einzigen Schäumungsvorgang ausgebildet und an die Platte 12 angeschäumt.

### Bezugszeichenliste

- 10: Diffusor
- 12: Platte
- 14: Verstärkungselement
- 16: Randbereich
- 18: Randumschäumung
- 20: Windabweiserlamelle

## Patentansprüche

1. Fahrzeugdach mit einem mit seinem hinteren Randbereich (16) ausstellbaren Windabweiserelement (20) und einer hinter dem Windabweiserelement angeordneten Abdeckanordnung zum wahlweisen gemeinsamen Verschließen oder mindestens teilweisen Freilegen einer Dachöffnung, wobei das Windabweiserelement einen Störkörper (10) zur Vermeidung unerwünschter Luftströmungsgeräusche bei geöffneter Abdeckanordnung aufweist, **dadurch gekennzeichnet, dass** der Störkörper (10) an das Windabweiserelement (20) angeschäumt ist.

2. Fahrzeugdach nach Anspruch 1, **dadurch gekennzeichnet, dass** das Windabweiserelement (20) an der vorderen Kante der Dachöffnung angebracht ist.

3. Fahrzeugdach nach Anspruch 1 oder 2, **dadurch gekennzeichnet, dass** der Störkörper (10) in der Mitte des hinteren Randbereichs (16) des Windabweiserelements (20) angeschäumt ist.

4. Fahrzeugdach nach Anspruch 3, **dadurch gekennzeichnet, dass** der Störkörper (10) von der Hinterkante des Windabweiserelements (20) nach oben absteht.

5. Fahrzeugdach nach einem der vorhergehenden Ansprüche, **dadurch gekennzeichnet, dass** das Windabweiserelement als Windabweiserlamelle (20) ausgebildet ist.

6. Fahrzeugdach nach einem der vorherigen Ansprüche, **dadurch gekennzeichnet, dass** das Windabweiserelement (20) eine Platte (12) aufweist, die mir einer Randumschäumung (18) versehen ist, welche die Platte in ihrem Randbereich umgibt.

7. Fahrzeugdach nach Anspruch 6, **dadurch gekennzeichnet, dass** der Störkörper (10) und die Randumschäumung (18) als ein einziger Schaumkörper ausgebildet sind.

8. Fahrzeugdach nach Anspruch 6 oder 7, **dadurch gekennzeichnet, dass** die Platte (12) aus einem insbesondere transparenten Kunststoff oder aus Glas besteht.

9. Fahrzeugdach nach einem der Ansprüche 6 bis 8, **dadurch gekennzeichnet, dass** in die Randumschäumung (18) zumindest ein Verstärkungselement (14) eingeschäumt ist.

10. Fahrzeugdach nach Anspruch 9, **dadurch gekennzeichnet, dass** das Verstärkungselement (14) ein Blechprofil ist.

11. Fahrzeugdach nach einem der vorhergehenden Ansprüche, **dadurch gekennzeichnet, dass** der Störkörper (10) und ggfs. die Randumschäumung (18) aus Polyurethan bestehen.

12. Verfahren zur Herstellung eines Windabweiserelements für ein Fahrzeugdach mit einem mit seinem hinteren Randbereich (16) ausstellbaren Windabweiserelement (20) und einer hinter dem Windabweiserelement angeordneten Abdeckanordnung zum wahlweisen gemeinsamen Verschließen oder mindestens teilweisen Freilegen einer Dachöffnung, wobei ein Störkörper (10) zur Vermeidung unerwünschter Luftströmungsgeräusche bei geöffneter Abdeckanordnung an die Windabweiserlamelle angeschäumt wird.

13. Verfahren nach Anspruch 12, **dadurch gekennzeichnet, dass** eine Platte (12) in ihrem Randbereich mit einer Randumschäumung (18) umschäumt wird und ein hierzu verwendetes Schäumwerkzeug sowohl die negative Form der Randumschäumung als auch des Störkörpers (10) beinhaltet, wobei in einem einzigen Schäumprozess die Randumschäumung und der Störkörper ausgeschäumt und an die Platte angeschäumt werden.

14. Verfahren nach Anspruch 13, **dadurch gekennzeichnet, dass** in die Randumschäumung (18) und der Diffusor (10) mit Polyurethan ausgeschäumt werden.

15. Verfahren nach Anspruch 13 oder 14, **dadurch gekennzeichnet, dass** in das Schäumwerkzeug vor dem Schäumvorgang mindestens ein Verstärkungselement (14) eingelegt wird, welche(s) in die Randumschäumung (18) eingeschäumt wird bzw. werden.
